# EUROPÄISCHE PATENTSCHRIFT

(11) **EP 4 115 246 B1**
(45) Veröffentlichungstag und Bekanntmachung des Hinweises auf die Patenterteilung: **09.07.2025**
(21) Anmeldenummer: 21709389.7
(22) Anmeldetag: 01.03.2021
(51) Int. Cl.: G05B 19/042

(54) **FELDGERÄTEADAPTER ZUR DRAHTLOSEN DATENÜBERTRAGUNG**
FIELD DEVICE ADAPTOR FOR WIRELESS DATA TRANSMISSION
ADAPTATEUR POUR APPAREIL DE TERRAIN POUR LA TRANSMISSION SANS FIL DE DONNÉES

(30) Priorität: 03.03.2020 DE 102020105605
(43) Veröffentlichungstag der Anmeldung: 11.01.2023
(73) Patentinhaber: Endress+Hauser SE+Co. KG, 79689 Maulburg (DE)
(72) Erfinder: SCHÄUBLE, Harald, 79541 Lörrach (DE); LILL, Dirk, 79100 Freiburg (DE); STIB, Ralph, 79677 Schönau (DE); STUDER, Matthias, 8965 Berikon (CH); DÖBELI, Markus, 9854 Geroldswil (CH)
(74) Vertreter: Endress + Hauser Group Services (Deutschland) AG+Co. KG
(86) Internationale Anmeldenummer: PCT/EP2021/055056
(87) Internationale Veröffentlichungsnummer: WO 2021/175787

(56) Entgegenhaltungen:
- EP-A1- 2 307 934
- EP-A1- 3 008 530
- WO-A1-2019/007668
- US-B2- 9 768 641

## Beschreibung

Die Erfindung bezieht sich auf einen Feldgeräteadapter zur drahtlosen Datenübertragung sowie ein System der Automatisierungstechnik zum Erfassen und/oder Stellen einer Prozessgröße.

In der Automatisierungstechnik, insbesondere in der Prozessautomatisierungstechnik, werden vielfach Feldgeräte eingesetzt, die zur Bestimmung, Optimierung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, Leitfähigkeitsmessgeräte, usw., welche die entsprechenden Prozessvariablen Füllstand, Durchfluss, Druck, Temperatur bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Im Zusammenhang mit der Erfindung werden unter Feldgeräten also auch Remote I/Os (elektrische Schnittstellen), Funkadapter bzw. allgemein Geräte verstanden, die auf der Feldebene angeordnet sind.

Eine Vielzahl solcher Feldgeräte wird von der Firma Endress + Hauser hergestellt und vertrieben.

Die WO 2019/007668 A1 offenbart einen Feldgeräteadapter zur drahtlosen Datenübertragung mit einer Versorgungsschaltung, die in eine Verbindungsleitung eingebracht ist. Die US 9 768 641 B2 offenbart eine Funkeinheit für eine Anlage der Prozessautomatisierungstechnik.

Gegenwärtig sind in einer Vielzahl der bestehenden Automatisierungsanlagen noch Zweileiterfeldgeräte, die über eine Zweidrahtleitung zu einer übergeordneten Einheit, bspw. eine Steuereinheit SPS, verbunden sind, gängig. Die Zweileiterfeldgeräte sind derartig ausgebildet, dass die Mess- bzw. Stellwerte als Haupt-Prozessvariable über die Zweidrahtleitung bzw. das Zweileiterkabel analog in Form eines 4-20 mA Signals kommuniziert, d.h. übertragen, werden. Zur Übertragung aller anderen Daten hat sich insbesondere das HART Protokoll bewährt, bei welchem dem analogen Stromsignal von 4-20 mA ein Frequenzsignal als digitales Zweileitersignal zur Datenübertragung überlagert wird. Gemäß dem HART Protokoll wird zwischen 1200 Hz und 2200 Hz zur Datenübertragung umgeschaltet, wobei die niedrigere Frequenz für eine logische "1" und die höhere Frequenz für eine logische "0" steht. Auf diese Weise bleibt das sich nur langsam veränderliche analoge Stromsignal von der Frequenzüberlagerung unberührt, sodass mittels HART analoge und digitale Kommunikation vereint wird.

Im Zuge der zunehmenden Digitalisierung ist es jedoch wünschenswert, dass die Daten nicht nur über die Zweidrahtleitung, also rein drahtgebunden, übertragen werden können, sondern dass die Daten auch drahtlos kommuniziert werden. Sei es um die Daten drahtlos zu einer Datenbank, bspw. einer Cloud-Datenbank, zu übertragen und dort verfügbar zu machen oder um Daten zwischen dem Feldgerät und einer mobilen Bedieneinheit drahtlos zu übertragen, um bspw. das Feldgerät über das mobile Bediengerät drahtlos zu parametrieren.

Es ist somit eine Aufgabe der Erfindung, eine Möglichkeit vorzuschlagen, mittels derer bestehende Feldgeräte, die eigentlich zur reinen drahtgebundenen Datenübertragung ausgebildet sind, für eine drahtlose Datenkommunikation nachgerüstet werden können.

Die Aufgabe wird durch einen Feldgeräteadapter zur drahtlosen Datenübertragung gemäß Patentanaspruch 1 und ein System der Automatisierungstechnik gemäß Patentanspruch 14 gelöst.

Der erfindungsgemäße Feldgeräteadapter zur drahtlosen Datenübertragung umfasst wenigstens:
- ein Adaptergehäuse mit einem ersten Ende und einem zweiten Ende, wobei das erste Ende ein erstes Anschlusselement und ein zweites Anschlusselement zum elektrischen Anschließen an eine Feldgerätelektronik eines Feldgerätes und das zweite Ende ein drittes Anschlusselement und ein viertes Anschlusselement zum elektrischen Anschließen einer Zweidrahtleitung aufweist;
- eine in dem Adaptergehäuse angeordnete Adapterelektronik, die das erste Anschlusselement mit dem dritten Anschlusselement durch eine erste elektrische Verbindungsleitung und das zweite Anschlusselement mit dem vierten Anschlusselement durch eine zweite elektrische Verbindungsleitung verbindet, wobei die Adapterelektronik eine in die erste Verbindungsleitung eingebrachte, vorzugsweise ungeregelte bzw. nicht geregelte erste Versorgungschaltung zum Bereitstellen einer ersten Versorgungsspannung aus einem in der ersten Verbindungsleitung fließenden Schleifenstrom und eine in die zweite Verbindungsleitung eingebrachte, vorzugsweise ungeregelte bzw. nicht geregelte zweite Versorgungschaltung (15b) zum Bereitstellen einer zweiten Versorgungsspannung aus dem in der zweiten Verbindungsleitung fließenden Schleifenstrom umfasst, wobei die Adapterelektronik ferner ein HART-Modem, welches auf einem HART Protokoll basiert, umfasst, welches zumindest über einen in der zweiten Verbindungsleitung angeordneten Abgriffspunkt mit der zweiten Verbindungsleitung verbunden ist, und dazu eingerichtet ist, ein auf den Schleifenstrom aufmoduliertes Zweileitersignal abzugreifen und in ein Signal, vorzugsweise ein UART-Signal zu übersetzen und/oder ein zugeführtes Signal, vorzugsweise ein UART-Signal in ein Zweileitersignal zu übersetzen und das übersetzte Zweileitersignal über den Abgriffspunkt auf den Schleifenstrom aufzumodulieren, wobei die Adapterelektronik ferner ein Funkmodul mit einer Antenne zum Senden und/oder Empfangen umfasst und dazu eingerichtet ist, das durch das HART-Modem übersetzte und zugeführte Signal, vorzugsweise UART-Signal als ein Funksignal auszusenden und/oder ein Funksignal welches durch das HART-Modem in ein Zweileitersignal übersetzt werden soll, zu empfangen und als Signal, vorzugsweise UART-Signal dem HART-Modem zuzuführen, wobei die Adapterelektronik derartig ausgebildet ist, dass die erste Versorgungsschaltung das HART-Modem mit der ersten Versorgungsspannung und die zweite Versorgungsschaltung (15b) das Funkmodul mit der zweiten Versorgungspannung, vorzugsweise unabhängig voneinander speist.

Erfindungsgemäß wird ein Feldgeräteadapter vorgeschlagen, der zwei interne Versorgungsschaltungen aufweist, wobei eine der beiden Versorgungsschaltung ein HART-Modem und die andere der beiden Versorgungsschaltungen ein Funkmodul mit Energie versorgt.

Über den Feldgeräteadapter können beispielsweise Daten zu einer Cloud-Datenbank übertragen werden. Als Cloud-Datenbank soll im Sinne der vorliegenden Erfindung eine Datenbank verstanden werden, die von einem Benutzer über das Internet kontaktiert werden kann. Es kann hierbei vorgesehen sein, dass die Datenbank eine Applikation aufweist, beispielsweise zum Visualisieren der Daten, welche auf der Datenbank abgelegt sind. Ein Benutzer kann per Internet von seinem Gerät, beispielsweise einem PC oder einem mobilen Endgerät, auf die Applikation der Datenbank und somit die Daten zugreifen.

Ebenfalls ist die Bedienung eines "proprietären" Feldgerätes, welches eigentlich kein Funkmodul aufweist, über den an das Feldgerät angeschlossenen Funkadapter möglich.

Eine vorteilhafte Ausgestaltung des erfindungsgemäßen Feldgeräteadapters sieht vor, dass die Adapterelektronik ferner eine galvanische Trennung aufweist, die das HART-Moden galvanisch von dem Funkmodul trennt und das HART-Modem und das Funkmodul über die galvanische Trennung zumindest das Signal kommunizieren.

Eine weitere vorteilhafte Ausgestaltung des erfindungsgemäßen Feldgeräteadapters sieht vor, dass das HART-Modem (17) als ein Primary oder Secondary Master gemäß dem HART Protokoll eingerichtet ist.

Eine weitere vorteilhafte Ausgestaltung des erfindungsgemäßen Feldgeräteadapters sieht vor, dass die Adapterelektronik ferner zumindest einen zwischen der ersten Versorgungsschaltung und dem dritten Anschlusselement in die erste Verbindungsleitung eingebrachten Kommunikationswiderstand aufweist.

Eine alternative Ausgestaltung des erfindungsgemäßen Feldgeräteadapters sieht vor, dass die Adapterelektronik (14) ferner zumindest einen zwischen die zweite Versorgungsschaltung (15b) und dem vierten Anschlusselement (11b) in die zweite Verbindungsleitung (26) eingebrachten Kommunikationswiderstand (18) aufweist.

Eine weitere vorteilhafte Ausgestaltung des erfindungsgemäßen Feldgeräteadapters sieht vor, dass das Funkmodul ferner dazu eingerichtet ist, das Funksignal gemäß eines der folgenden Funkprotokolle:
- ein Bluetooth-Protokoll oder einer davon abgewandelten Variante,
- ein 6LoWPAN-Protokoll,
- ein WirelessHART-Protokoll, und/oder
- ein 6TiSCH-Protokoll
zu senden und/oder zu empfangen.

Eine weitere vorteilhafte Ausgestaltung des erfindungsgemäßen Feldgeräteadapters sieht vor, dass die Adapterelektronik ferner EMV- Maßnahmen aufweist, die derartig ausgebildet sind, dass zumindest die erste und/oder zweite Versorgungsschaltung vor EMV-Störungen geschützt sind.

Eine weitere vorteilhafte Ausgestaltung des erfindungsgemäßen Feldgeräteadapters sieht vor, dass die Adapterelektronik ferner Ex-Schutzmaßnahmen aufweist, wobei die Ex-Schutzmaßnahmen strombegrenzende Ex-Schutzmaßnahmen und/oder spannungsbegrenzende Maßnahmen umfassen. Insbesondere kann die Ausgestaltung vorsehen, dass die spanungsbegrenzenden Maßnahmen zumindest einen Current Shunt Regulator, insbesondere einen Higher Current Shunt Regulator umfassen, der parallel zur ersten und/oder der zweiten Versorgungsschaltung geschaltet ist und/oder dass die strombegrenzenden Maßnahmen zumindest einen Widerstand umfassen, der zwischen die erste Versorgungsschaltung (15a) und dem HART-Modem und/oder zwischen die zweite Versorgungsschaltung und dem Funkmodul geschaltet ist.

Eine weitere vorteilhafte Ausgestaltung des erfindungsgemäßen Feldgeräteadapters sieht vor, dass das erste Ende des Adaptergehäuses (7) ferner derartig ausgebildet ist, dass das erste Ende ein abgeschlossenes Ende ist, sodass der Feldgeräteadapter und das Feldgerät zwei separat voneinander getrennte mechanische Einheiten bilden.

Eine alternative Ausgestaltung des erfindungsgemäßen Feldgeräteadapters sieht vor, dass das erste Ende des Adaptergehäuses ferner derartig ausgebildet ist, dass der Feldgeräteadapter an ein Feldgerät, bevorzugt einen Kabelverschraubungsanschluss eines Feldgeräts, besonders bevorzugt an ein M20-Kabelverschraubungsanschluss des Feldgerätes mechanisch anschließbar ist, sodass der Feldgeräteadapter und das Feldgerät eine mechanisch verbundene Einheit bilden.

Eine weitere vorteilhafte Ausgestaltung des erfindungsgemäßen Feldgeräteadapters sieht vor, dass die erste und/oder zweite Versorgungsschaltung jeweils zumindest einen Current Shunt Regulator, insbesondere einen Higher Current Shunt Regulator oder jeweils zumindest eine Diode, vorzugsweise jeweils zumindest eine z-Diode, die auf einen festen Wert für die erste bzw. zweite Versorgungsspannung ausgelegt ist, aufweist.

Die Erfindung betrifft weiterhin ein System der Automatisierungstechnik zum Erfassen und/oder Stellen einer Prozessgröße, aufweisend:
- eine erste Zweidrahtleitung zum Übertragen eines Schleifenstromes mit einem aufmodulierten Zweileitersignal;
- ein Feldgerät der Automatisierungstechnik mit einem Feldgerätegehäuse, welches zumindest eine Gehäuseöffnung aufweist, wobei das Feldgerät ferner eine innerhalb des Feldgerätegehäuses angeordnete Feldgerätelektronik umfasst, die dazu eingerichtet ist, Daten, insbesondere die Prozessgröße, in Form von Zweileitersignalen, insbesondere Zweileitersignalen, die auf einem HART Protokoll basieren, zu kommunizieren;
- einen Feldgeräteadapter gemäß einer zuvor beschriebenen Ausgestaltung.

Die Erfindung wird anhand der nachfolgenden Zeichnungen näher erläutert. Es zeigt:
Fig. 1: eine schematische Darstellung eines Zweileiterfeldgerätes, wie es gegenwärtig in einer Vielzahl der bestehenden Automatisierungsanlagen vorzufinden ist und mit welchem rein drahtgebunden über eine Zweidrahtleitung Daten kommuniziert werden können,
Fig. 2: eine schematische Darstellung eines erfindungsgemäßen Feldgeräteadapters,
Fig. 3: eine schematische Darstellung eines Feldgerätes, an dem ein Feldgeräteadapter mechanisch angebracht ist, sodass das Feldgerät und der Feldgeräteadapter eine mechanisch verbundene Einheit bilden, und
Fig. 4: eine schematische Darstellung eines Feldgerätes und eines Feldgeräteadapters, die jeweils eine voneinander getrennte Einheit bilden und über eine Verbindungsleitung elektrisch miteinander verbunden sind.

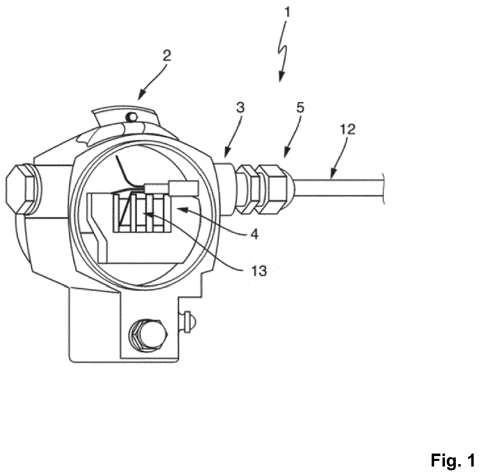

Figur 1 zeigt schematisch ein Zweileiterfeldgerät, welches ein metallisches Gehäuse 2 umfasst, indem eine Feldgeräteelektronik 4 angeordnet ist. Die Feldgeräteelektronik 4 ist derartig ausgebildet, dass diese Anschlussklemmen 13 aufweist, über die eine Zweidrahtleitung 12 elektrisch angeschlossen ist. Über die Zweidrahtleitung wird die Feldgeräteelektronik 4 und somit das Feldgerät 1 an eine, in Fig. 1 nicht gesondert dargestellte, übergeordnete Einheit 31 angeschlossen, um mit der übergeordneten Einheit Daten 31 drahtgebunden zu kommunizieren. Hierbei werden die Mess- bzw. Stellwerte als Haupt-Prozessvariable über die Zweidrahtleitung 12 analog in Form eines 4-20 mA Stromsignals kommuniziert und alle anderen Daten werden in Form eines digitalen Zweileitersignals gemäß dem HART Standard übertragen.

Um die von außerhalb des Gehäuses 2 kommende Zweidrahtleitung 12 mit der im Gehäuse 2 angeordneten Feldgeräteelektronik 4 elektrisch kontaktieren zu können, weist das metallische Gehäuse 2 eine Gehäuseöffnung 3 auf. In die Gehäuseöffnung 3 ist eine Kabelverschraubung 5 eingebracht, so dass die Zweidrahtleitung 12 durch die Kabelverschraubung 5 in das Gehäuse 2 einbringbar ist. Die Kabelverschraubung 5 ist vorzugsweise in Form einer PG-Kabelverschraubung, d.h. eine Kabelverschraubung mit Stahlpanzerrohrgewinde, gemäß der im Mai 2014 veröffentlichten Norm DIN EN 62444 ausgebildet. Die Kabelverschraubung 5 kann bspw. als M20, d.h. einen Außendurchmesser von 20 mm aufweisende, PG-Kabelverschraubung ausgebildet sein.

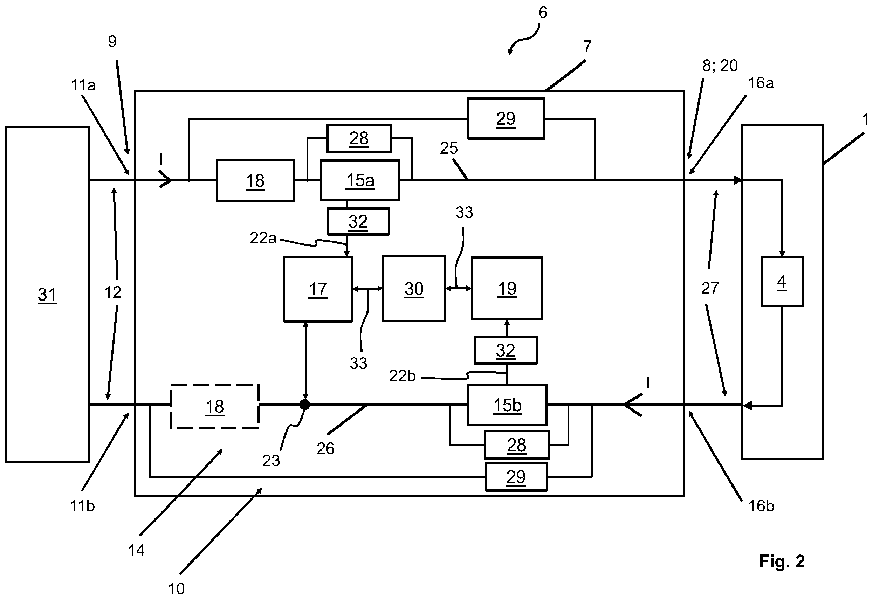

Fig. 2 zeigt eine schematische Darstellung eines erfindungsgemäßen Feldgeräteadapters 6. Der Feldgeräteadapter 6 weist ein Adaptergehäuse 7 mit einer Adapterkammer 10 auf. Das Adaptergehäuse 7 kann derartig ausgebildet sein, dass der Feldgeräteadapter 6 an einem ersten Ende 8 mechanisch an eine Kabelverschraubung 5, insb. eine PG-Kabelverschraubung, eines Feldgerätes 1 befestigbar ist. Vorzugsweise weist das erste Ende 8 des Adaptergehäuses hierfür ein M20 Gewinde auf, über welches der Adapter an die Kabelverschraubung des Feldgerätes mechanisch anschraubbar ist. Insbesondere kann das erste Ende 8 derartig ausgebildet sein, dass es an eine PG-Kabelverschraubung mit einem M20 Gewinde, gemäß der im Mai 2014 veröffentlichten Norm DIN EN 62444, eines Feldgerätes anschließbar ist.

Zur elektrischen Kontaktierung weist der Feldgeräteadapter 6 an seinem ersten Ende 8 ein erstes und ein zweites Anschlusselement 16a und 16b auf. Das erste und zweite Anschlusselement 16a und 16b kann jeweils eine elektrische Anschluss- bzw. Verbindungsleitung zum elektrischen anschließen an eine Feldgeräteelektronik 4 umfassen. Insbesondere kann der Anschluss über eine Zweidrahtleitung 27 erfolgen.

An einem dem ersten Ende 8 gegenüberliegenden zweiten Ende 9, ist das Adaptergehäuse 7 derartig ausgebildet, dass eine Zweidrahtleitung 12 zur Datenübertragung an den Feldgeräteadapter 6 über ein drittes und ein viertes Anschlusselement 11a, 11b elektrisch anschließbar ist. Zum elektrischen Anschließen der Zweidrahtleitung 12 kann das dritte und vierte Anschlusselement 11a und 11b bspw. eine Anschlussklemme umfassen.

Ferner weist der Feldgeräteadapter 6 eine innerhalb der Adapterkammer angeordnete Adapterelektronik 14 auf, die das erste Anschlusselement 16a mit dem dritten Anschlusselement 11a über eine erste elektrische Verbindungsleitung 25 und das zweite Anschlusselement 16b mit dem vierten Anschlusselement 11b über eine zweite elektrische Verbindungsleitung 26 verbindet. Über die erste elektrische Verbindungsleitung 25 wird ein Schleifenstrom I von der Zweidrahtleitung 12 zu der Feldgeräteelektronik 4 und über die zweite elektrische Verbindungsleitung 26 wird der Schleifenstrom I wieder zurück zu der an den Feldgeräteadapter 6 angeschlossenen Zweidrahtleitung 12 geführt. Die Adapterelektronik 14 ist also dazu eingerichtet, digitale Zweileitersignal, die gemäß dem HART Standard ausgebildet sind, zwischen der über das dritte und vierte Anschlusselement angeschlossenen Zweidrahtleitung 12 und der über das erste und zweite Anschlusselement 16a 16b angeschlossenen Feldgeräteelektronik 4 in beide Richtungen zu kommunizieren.

Zur autarken Energieversorgung des Feldgeräteadapters 6 weist die Adapterelektronik 14 eine erste Versorgungsschaltung 15a und eine zweite Versorgungsschaltung 15b auf, die jeweils eine erste bzw. eine zweite Versorgungsspannung bereitstellen. Die Versorgungsschaltungen 15a, 15b sind vorzugsweise unabhängig voneinander ausgestaltet und durch eine galvanische Trennung 30 voneinander getrennt. Die Versorgungsschaltungen 15a, 15b können jeweils eine Z-Diode bzw. Zener-Diode aufweisen, die derartig in die erste bzw. zweite Verbindungsleitung eingebracht sind, dass sie jeweils in Sperrrichtung zu dem durch die erste bzw. zweite Verbindungsleitung fließenden Schleifenstrom geschaltet sind und jeweils ein Spannungsabgriff als Versorgungsspannung über der Diode erfolgen kann.

Alternativ können die erste und/oder zweite Versorgungsschaltung 15a und 15b jeweils zumindest einen Current Shunt Regulator, insbesondere einen Higher Current Shunt Regulator aufweisen, die jeweils derartig ausgebildet und in die erste bzw. zweite Verbindungsleitung eingebracht sind, dass jeweils eine fest einstellbare erste bzw. zweite Versorgungsspannung erzeugt wird.

Die Adapterelektronik 14 weist ferner ein Funkmodul 19 mit einer Antenne zum Senden bzw. Empfangen von Funksignalen und ein HART-Modem 17 zum Umsetzen/Wandeln der digitalen Zweileitersignal auf. Erfindungsgemäß wird das Funkmodul 19 von einer der beiden Versorgungsschaltungen und das HART-Modem 17 von der anderen Versorgungsschaltung mit Energie versorgt. Gemäß dem in Fig. 2 dargestellten Ausführungsbeispiel versorgt die erste Versorgungsschaltung 15a das HART-Modem 17 mit der ersten und die zweite Versorgungsschaltung 15b das Funkmodul 19 mit der zweiten Versorgungsspannung.

Das Funkmodul 19 ist derartig ausgebildet, dass insbesondere Funksignale gemäß einem Bluetooth-Protokoll oder einer davon abgewandelten Variante, ein 6LoWPAN-Protokoll, ein WirelessHART-Protokoll, und/oder ein 6TiSCH-Protokoll, übertragbar sind.

Um die auf der angeschlossenen Zweidrahtleitung 12 kommunizierten digitalen Zweileitersignale abgreifen zu können bzw. auf den Schleifenstrom I aufmodulieren zu können, weist die Adapterelektronik 14 einen in die zweite Verbindungsleitung 26 eingebrachten Abgriffspunkt 23 auf. Der Abgriffspunkt 23 ist vorzugsweise zwischen die in die zweite Verbindungsleitung 26 eingebrachte zweite Versorgungsschaltung 15b und dem vierten Anschlusselement 11b eingebracht. Ferner ist die Adapterelektronik 14 derartig ausgebildet, dass das Funkmodul 19 und das HART-Modem 17 Daten, bspw. über eine UART-Schnittstelle 33, miteinander kommunizieren können. Auf diese Weisen können die durch das Funkmodul 19 empfangenen Funksignale über die UART-Schnittstelle 33 zu dem HART-Modem 17 übertragen werden und von dem HART-Modem 17 in entsprechende digitale Zweilitersignale gewandelt werden, welche wiederum über den Abgriffspunkt 23 auf den Schleifenstrom aufmoduliert werden können. Ebenfalls können die auf dem Schleifenstrom kommunizierten digitalen Zweileitersignale durch das HART-Modem an dem Abgriffspunkt 23 abgegriffen werden und von dem HART-Modem 17 in UART-Signale gewandelt werden, welche wiederum über die UART-Schnittstelle 33 zu dem Funkmodul 19 übertragen werden und von diesem als Funksignale ausgesendet werden.

Um die beiden in den unterschiedlichen Verbindungsleitung sitzenden Versorgungsschaltungen unabhängig voneinander auszubilden, kann die Adapterelektronik eine galvanische Trennung aufweisen, über die lediglich die Daten zwischen dem Funkmodul und dem HART-Modem kommuniziert werden.

Damit die Adapterelektronik 14 die digitalen Zweileitersignale über den Abgriffspunkt 23 abgreifen oder auf den Schleifenstrom I aufmodulieren kann, ist ferner ein Kommunikationswiderstand 18 in der ersten elektrischen Verbindungsleitung 25 vorgesehen. Der Kommunikationswiderstand 18 kann hierbei zwischen der ersten Versorgungsschaltung 15a und dem dritten Anschlusselement 11a in der ersten elektrischen Verbindungsleitung 25 eingebracht sein.

Alternativ kann der Kommunikationswiderstand 18 auch zwischen der zweiten Versorgungsschaltung und dem vierten Anschlusselement in die zweite Verbindungsleitung 26 eingebracht sein. In Fig. 2 ist dies exemplarisch durch den gestrichelten Widerstand angedeutet. Es versteht sich von selbst, dass sich in diesem Fall kein Kommunikationswiderstand in der ersten Verbindungsleitung 25 befindet.

Damit die Adapterelektronik 14 digitale Zweileitersignale zu dem Feldgerät 1 kommunizieren kann, ist das HART Modem 17 vorzugsweise als ein sekundärer Master eingerichtet. Auf diese Weise lässt sich bspw. ein Feldgerät 1 drahtlos über Funksignale, die von dem Funkmodul 19 des Feldgeräteadapters 6 empfangen und durch das HART-Moden 17 in entsprechende digitale Zweileitersignale umgewandelt werden, parametrieren.

Alternativ kann das HART Modem 17 auch als Primary Master eingerichtet sein. Dies kann beispielsweise dann sinnvoll sein, wenn nur eine übergeordnete Einheit 31 ohne HART Kommunikationsmittel und somit kein anderer Primary Master vorhanden ist. In diesem Fall kann, bspw. zur Parametrierung des Feldgerätes, die Adapterelektronik 14 mit der Feldgeräteelektronik 4 über die Zweidrahtleitung 27 mittels HART kommunizieren.

Ergänzend kann die Adapterelektronik 14 EMV- Maßnahmen 29 aufweisen, die derartig ausgebildet sind, dass zumindest die erste und/oder zweite Versorgungsschaltung 15a, 15b vor EMV-Störungen geschützt sind. Die EMV-Maßnahmen können insbesondere ein oder mehrere Suppressordioden aufweisen, die zumindest zu der ersten bzw. zweiten Versorgungsschaltung parallelgeschaltet sind. Je nach dem in welcher Verbindungsleitung der Kommunikationswiderstand angeordnet ist, ist die Suppressordiode zu der in dieser Versorgungsleitung befindlichen Versorgungsschaltung und dem Kommunikationswiderstand parallelgeschaltet.

Ergänzend oder alternativ kann die Adapterelektronik 14 ferner Ex-Schutzmaßnahmen 28, 32 aufweisen. Diese können insbesondere strombegrenzende Ex-Schutzmaßnahmen 32 und/oder spannungsbegrenzende Ex-Schutzmaßnahmen 28 umfassen. Beispielsweise können die strombegrenzenden Ex-Schutzmaßnahmen Widerstände umfassen, die in eine Leitung zwischen der ersten Versorgungsschaltung und dem HART-Modem 22a und/oder in eine Leitung zwischen der zweiten Versorgungsschaltung und dem Funkmodul 22b zur jeweiligen Spannungsversorgung eingebracht sein. Die spannungsbegrenzenden Ex-Schutzmaßnahmen können zumindest einen Current Shunt Regulator, insbesondere einen Higher Current Shunt Regulator umfassen, der parallel zur ersten und/oder der zweiten Versorgungsschaltung 15a, 15b geschaltet ist.

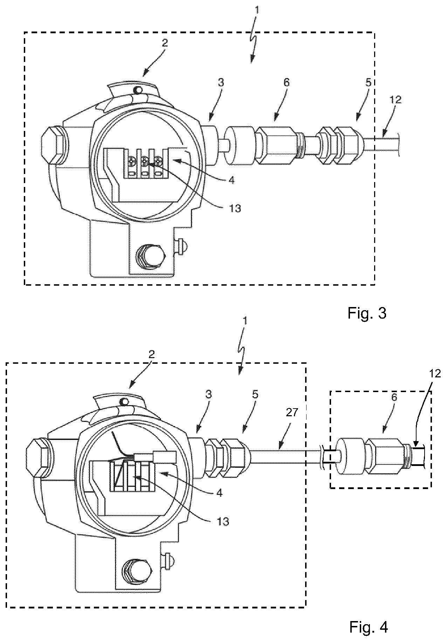

Fig. 3 zeigt eine schematische Darstellung eines Feldgerätes 1, an dem ein Feldgeräteadapter 6 mit seinem ersten Ende 8 mechanisch angebracht ist, sodass das Feldgerät 1 und der Feldgeräteadapter 6 eine mechanisch verbundene Einheit bilden. Der Feldgeräteadapter 6 kann dabei, wie in Fig. 3 dargestellt, derartig angeordnet sein, dass er sich zwischen der Gehäuseöffnung 3 des Feldgerätes 1 und der eigentlich auf die Gehäuseöffnung des Feldgerätes gehörende Kabelverschraubung 5 befindet. In diesem Fall ist das Adaptergehäuse 7 derartig ausgebildet, dass die Kabelverschraubung 5 an dem entsprechend ausgebildeten zweiten Ende 9 befestigbar bzw. anschraubbar ist. Beispielsweise kann das zweite Ende 9 in Form einer PG-Kabelverschraubung mit einem M20 Gewinde gemäß der im Mai 2014 veröffentlichten Norm DIN EN 62444 ausgebildet sein.

Alternativ kann der Feldgeräteadapter 6 auch derartig ausgebildet sein, dass das Adaptergehäuse 7 als Kabelverschraubung dient und somit eine separate Kabelverschraubung beim Anschließen an das Feldgerät 1 entfällt.

In beiden Fällen bilden das Feldgerät 1 und der an die Gehäuseöffnung 3 des Feldgerätes 1 mechanisch angebrachte Feldgeräteadapter eine mechanisch verbundene Einheit.

Im Gegensatz dazu, zeigt Fig. 4 eine schematische Darstellung eines Feldgerätes 1 und eines Feldgeräteadapters 6, die jeweils eine, voneinander getrennte mechanische Einheit bilden und elektrisch über eine Verbindungsleitung, insbesondere eine zweite Zweidrahtleitung 27miteinander verbunden sind. Dadurch, dass der Feldgeräteadapter 6 nur über die Verbindungsleitung 27 elektrisch und nicht über eine mechanische Verbindung mit dem Feldgerät 1 verbunden ist, ist der Feldgeräteadapter 6 flexibel in einer Automatisierungsanlage platzierbar, sodass er sich quasi unabhängig vom Einbauort des Feldgerätes 1 aufstellen lässt.

### Bezugszeichenliste

- 1: Feldgerät der Automatisierungstechnik
- 2: Feldgerätegehäuse
- 3: Gehäuseöffnung
- 4: Feldgeräteelektronik
- 5: Kabelverschraubung
- 6: Feldgeräteadapter
- 7: Adaptergehäuse
- 8: Erstes Ende des Adaptergehäuses
- 9: Zweites Ende des Adaptergehäuses
- 10: Adapterkammer
- 11a: Drittes Anschlusselement
- 11b: Viertes Anschlusselement
- 12: (Erste) Zweidrahtleitung
- 13: Anschlussklemmen des Feldgerätes
- 14: Adapterelektronik
- 15a: Erste Versorgungsschaltung zur Speisung des HART Modems
- 15b: Zweite Versorgungsschaltung zur Speisung des Funkmoduls
- 16a: Erstes Anschlusselement
- 16b: Zweites Anschlusselement
- 17: HART Modem
- 18: Kommunikationswiderstand
- 19: Funkmodul
- 20: Mechanisches Anschlusselement, bspw. M20-Gewinde zum mechanischen Anschluss des Adapters an eine Kabelverschraubung eines Feldgerätes
- 21: Bidirektionale galvanisch getrennte Datenübertragungseinheit
- 22a, 22b: Leitungen zur Spannungsversorgung
- 23: Abgriffspunkt
- 25: Erste elektrische Verbindungsleitung
- 26: Zweite elektrische Verbindungsleitung
- 27: Verbindungsleitung, vorzugsweise zweite Zweidrahtleitung
- 28: Spannungsbegrenzende Ex-Schutzmaßnahmen, insb. Higer Current Shunt Regulators
- 29: EMV-Maßnahmen
- 30: Galvanische Trennung
- 31: Übergeordnete Einheit, z.B. Leitsystem
- 32: Strombegrenzende Ex-Schutzmaßnahmen, insb. Widerstände
- 33: Schnittstelle, insb. UART-Schnittstelle
- I: Schleifenstrom

## Patentansprüche

1. Feldgeräteadapter (6) zur drahtlosen Datenübertragung, zumindest aufweisend:
- ein Adaptergehäuse (7) mit einem ersten Ende (8) und einem zweiten Ende (9), wobei das erste Ende (8) ein erstes Anschlusselement (16a) und ein zweites Anschlusselement (16b) zum elektrischen Anschließen an eine Feldgerätelektronik (4) eines Feldgerätes (1) und das zweite Ende (9) ein drittes Anschlusselement (11a) und ein viertes Anschlusselement (11b) zum elektrischen Anschließen einer Zweidrahtleitung (12) aufweist;
- eine in dem Adaptergehäuse (7) angeordnete Adapterelektronik (14), die das erste Anschlusselement (16a) mit dem dritten Anschlusselement (11a) durch eine erste elektrische Verbindungsleitung (25) und das zweite Anschlusselement (16b) mit dem vierten Anschlusselement (11b) durch eine zweite elektrische Verbindungsleitung (26) verbindet, wobei die Adapterelektronik (14) eine in die erste Verbindungsleitung (25) eingebrachte, vorzugsweise ungeregelte bzw. nicht geregelte erste Versorgungschaltung (15a) zum Bereitstellen einer ersten Versorgungsspannung aus einem in der ersten Verbindungsleitung (25) fließenden Schleifenstrom (I) und eine in die zweite Verbindungsleitung (26) eingebrachte, vorzugsweise ungeregelte bzw. nicht geregelte zweite Versorgungschaltung (15b) zum Bereitstellen einer zweiten Versorgungsspannung aus dem in der zweiten Verbindungsleitung (25) fließenden Schleifenstrom (I) umfasst, wobei die Adapterelektronik (14) ferner ein HART-Modem (17), welches auf einem HART Protokoll basiert, umfasst, welches zumindest über einen in der zweiten Verbindungsleitung angeordneten Abgriffspunkt (23) mit der zweiten Verbindungsleitung verbunden ist, und dazu eingerichtet ist, ein auf den Schleifenstrom (I) aufmoduliertes Zweileitersignal abzugreifen und in ein Signal, vorzugsweise ein UART-Signal zu übersetzen und/oder ein zugeführtes Signal, vorzugsweise ein UART-Signal in ein Zweileitersignal zu übersetzen und das übersetzte Zweileitersignal über den Abgriffspunkt (23) auf den Schleifenstrom (I) aufzumodulieren, wobei die Adapterelektronik ferner ein Funkmodul (19) mit einer Antenne zum Senden und/oder Empfangen umfasst und dazu eingerichtet ist, das durch das HART-Modem (17) übersetzte und zugeführte Signal, vorzugsweise UART-Signal als ein Funksignal auszusenden und/oder ein Funksignal welches durch das HART-Modem (17) in ein Zweileitersignal übersetzt werden soll, zu empfangen und als Signal, vorzugsweise UART-Signal dem HART-Modem zuzuführen, wobei die Adapterelektronik derartig ausgebildet ist, dass die erste Versorgungsschaltung (15a) das HART-Modem (17) mit der ersten Versorgungsspannung und die zweite Versorgungsschaltung (15b) das Funkmodul (19) mit der zweiten Versorgungspannung, vorzugsweise unabhängig voneinander speist.

2. Feldgeräteadapter nach dem vorhergehenden Anspruch, wobei die Adapterelektronik (14) ferner eine galvanische Trennung (30) aufweist, die das HART-Moden (17) galvanisch von dem Funkmodul (19) trennt und das HART-Modem (17) und das Funkmodul (19) über die galvanische Trennung (30) zumindest das Signal, vorzugsweise das UART-Signal kommunizieren.

3. Feldgeräteadapter nach einem oder mehreren der vorhergehenden Ansprüche, wobei das HART-Modem (17) als ein Primary oder Secondary Master gemäß dem HART Protokoll eingerichtet ist.

4. Feldgeräteadapter nach einem oder mehreren der vorhergehenden Ansprüche, wobei die Adapterelektronik (14) ferner zumindest einen zwischen der ersten Versorgungsschaltung (15a) und dem dritten Anschlusselement (11a) in die erste Verbindungsleitung (25) eingebrachten Kommunikationswiderstand (18) aufweist.

5. Feldgeräteadapter nach einem oder mehreren der vor Ansprüche 1 bis 3, wobei die Adapterelektronik (14) ferner zumindest einen zwischen die zweite Versorgungsschaltung (15b) und dem vierten Anschlusselement (11b) in die zweite Verbindungsleitung (26) eingebrachten Kommunikationswiderstand (18) aufweist.

6. Feldgeräteadapter nach einem oder mehreren der vorhergehenden Ansprüche, wobei das Funkmodul ferner dazu eingerichtet ist, das Funksignal gemäß eines der folgenden Funkprotokolle:
- ein Bluetooth-Protokoll oder einer davon abgewandelten Variante,
- ein 6LoWPAN-Protokoll,
- ein WirelessHART-Protokoll, und/oder
- ein 6TiSCH-Protokoll
zu senden und/oder zu empfangen.

7. Feldgeräteadapter nach einem oder mehreren der vorhergehenden Ansprüche, wobei die Adapterelektronik (14) ferner EMV- Maßnahmen (29) aufweist, die derartig ausgebildet sind, dass zumindest die erste und/oder zweite Versorgungsschaltung (15a, 15b) vor EMV-Störungen geschützt sind.

8. Feldgeräteadapter nach einem oder mehreren der vorhergehenden Ansprüche, wobei die Adapterelektronik (14) ferner Ex-Schutzmaßnahmen (28, 32) aufweist, wobei die Ex-Schutzmaßnahmen strombegrenzende Ex-Schutzmaßnahmen (32) und/oder spannungsbegrenzende Maßnahmen (28) umfassen.

9. Feldgeräteadapter nach dem vorhergehenden Anspruch, wobei die spanungsbegrenzenden Maßnahmen (28) zumindest einen Current Shunt Regulator, insbesondere einen Higher Current Shunt Regulator umfassen, der parallel zur ersten und/oder der zweiten Versorgungsschaltung (15a, 15b) geschaltet ist.

10. Feldgeräteadapter nach einem der Ansprüche 8 oder 9, wobei die strombegrenzenden Maßnahmen zumindest einen Widerstand (32) umfassen, der zwischen die erste Versorgungsschaltung (15a) und dem HART-Modem (17) und/oder zwischen die zweite Versorgungsschaltung und dem Funkmodul (19) geschaltet ist.

11. Feldgeräteadapter nach einem oder mehreren der vorhergehenden Ansprüche, wobei das erste Ende (8) des Adaptergehäuses (7) ferner derartig ausgebildet ist, dass das erste Ende ein abgeschlossenes Ende ist, sodass der Feldgeräteadapter (6) und das Feldgerät (1) zwei separat voneinander getrennte mechanische Einheiten bilden.

12. Feldgeräteadapter nach einem der Ansprüche 1 bis 10, wobei das erste Ende (8) des Adaptergehäuses (7) ferner derartig ausgebildet ist, dass der Feldgeräteadapter (6) an ein Feldgerät (1), bevorzugt einen Kabelverschraubungsanschluss (5) eines Feldgeräts, besonders bevorzugt an ein M20-Kabelverschraubungsanschluss des Feldgerätes (1) mechanisch anschließbar ist, sodass der Feldgeräteadapter (6) und das Feldgerät (1) eine mechanisch verbundene Einheit bilden.

13. Feldgeräteadapter nach einem oder mehreren der vorhergehenden Ansprüche, wobei die erste und/oder zweite Versorgungsschaltung (15) jeweils zumindest einen Current Shunt Regulator, insbesondere einen Higher Current Shunt Regulator oder jeweils zumindest eine Diode, vorzugsweise jeweils zumindest eine z-Diode, die auf einen festen Wert für die erste bzw. zweite Versorgungsspannung ausgelegt ist, aufweist.

14. System der Automatisierungstechnik (1) zum Erfassen und/oder Stellen einer Prozessgröße, aufweisend:
- eine erste Zweidrahtleitung (12) zum Übertragen eines Schleifenstromes (I) mit einem aufmodulierten Zweileitersignal;
- ein Feldgerät der Automatisierungstechnik (1) mit einem Feldgerätegehäuse (2), welches zumindest eine Gehäuseöffnung (3) aufweist, wobei das Feldgerät (1) ferner eine innerhalb des Feldgerätegehäuses (2) angeordnete Feldgerätelektronik (4) umfasst, die dazu eingerichtet ist, Daten, insbesondere die Prozessgröße, in Form von Zweileitersignalen, insbesondere Zweileitersignalen die auf einem HART Protokoll basieren, zu kommunizieren;
- einen Feldgeräteadapter (6) nach einem oder mehreren der vorhergehenden Ansprüche.

## Claims

1. A field device adapter (6) for wireless data transmission, having at least:
- One adapter housing (7) with a first end (8) and a second end (9), wherein the first end (8) has a first connecting element (16a) and a second connecting element (16b) for electrically connecting to the field device electronics (4) of a field device (1), and the second end (9) has a third connecting element (11a) and a fourth connecting element (11b) for electrically connecting a two-wire cable (12);
- Adapter electronics (14) arranged in the adapter housing (7), which connect the first connecting element (16a) to the third connecting element (11a) through a first electrical connecting cable (25), and the second connecting element (16b) to the fourth connecting element (11b) through a second electrical connecting cable (26), wherein the adapter electronics (14) comprise a preferably unregulated or non-regulated first supply circuit (15a) integrated into the first connecting cable (25) for providing a first supply voltage from a loop current (I) flowing in the first connecting cable (25), and a preferably unregulated or non-regulated second supply circuit (15b) integrated into the second connecting cable (26) for providing a second supply voltage from the loop current (I) flowing in the second connecting cable (25), wherein the adapter electronics (14) further comprise a HART modem (17), which is based on a HART protocol, which is connected to the second connecting cable at least via a tapping point (23) arranged in the second connecting cable, and are adapted to tap a two-wire signal modulated onto the loop current (I) and to translate it into a signal, preferably a UART signal, and/or to translate a supplied signal, preferably a UART signal, into a two-wire signal, and to modulate the translated two-wire signal onto the loop current (I) via the tapping point (23), wherein the adapter electronics further comprise a radio module (19) with an antenna for transmitting and/or receiving and are adapted to transmit the signal translated and supplied by the HART modem (17), preferably a UART signal, as a radio signal and/or to receive a radio signal which is to be translated into a two-wire signal by the HART modem (17) and to supply it as a signal, preferably a UART signal, to the HART modem, wherein the adapter electronics are configured in such a way that the first supply circuit (15a) supplies the HART modem (17) with the first supply voltage and the second supply circuit (15b) supplies the radio module (19) with the second supply voltage, preferably independently of one another.

2. The field device adapter as claimed in the preceding claim, wherein the adapter electronics (14) further comprise a galvanic isolation (30), which galvanically isolates the HART modem (17) from the radio module (19), and the HART modem (17) and the radio module (19) communicate at least the signal, preferably the UART signal, via the galvanic isolation (30).

3. The field device adapter as claimed in one or more of the preceding claims, wherein the HART modem (17) is adapted as a primary or secondary master according to the HART protocol.

4. The field device adapter as claimed in one or more of the preceding claims, wherein the adapter electronics (14) further comprise at least one communication resistor (18) housed in the first connecting cable (25) between the first supply circuit (15a) and the third connecting element (11a).

5. The field device adapter as claimed in one or more of claims 1 to 3, wherein the adapter electronics (14) further comprise at least one communication resistor (18) integrated into the second connecting cable (26) between the second supply circuit (15b) and the fourth connecting element (11b).

6. The field device adapter as claimed in one or more of the preceding claims, wherein the radio module is further adapted to send and/or receive the radio signal according to one of the following radio protocols:
- A Bluetooth protocol or a modified version thereof,
- A 6LoWPAN protocol,
- A WirelessHART protocol, and/or
- A 6TiSCH protocol.

7. The field device adapter as claimed in one or more of the preceding claims, wherein the adapter electronics (14) further comprise EMC measures (29) which are configured in such a way that at least the first and/or second supply circuit (15a, 15b) are/is protected against EMC interference.

8. The field device adapter as claimed in one or more of the preceding claims, wherein the adapter electronics (14) further involve explosion protection measures (28, 32), wherein the explosion protection measures comprise current-limiting explosion protection measures (32) and/or voltage-limiting measures (28).

9. The field device adapter as claimed in the preceding claim, wherein the voltage-limiting measures (28) comprise at least one current shunt regulator, in particular a higher current shunt regulator, which is connected in parallel with the first and/or the second supply circuit (15a, 15b).

10. The field device adapter as claimed in either claim 8 or claim 9, wherein the current-limiting measures comprise at least one resistor (32) connected between the first supply circuit (15a) and the HART modem (17) and/or between the second supply circuit and the radio module (19).

11. The field device adapter as claimed in one or more of the preceding claims, wherein the first end (8) of the adapter housing (7) is further configured in such a way that the first end is a closed end, so that the field device adapter (6) and the field device (1) form two wholly separate mechanical units.

12. The field device adapter as claimed in claims 1 to 10, wherein the first end (8) of the adapter housing (7) is further configured in such a way that the field device adapter (6) can be mechanically connected to a field device (1), preferably a cable gland connection (5) on a field device, particularly preferably an M20 cable gland connection on the field device (1), so that the field device adapter (6) and the field device (1) form a mechanically connected unit.

13. The field device adapter as claimed in one or more of the preceding claims, wherein the first and/or second supply circuit (15) each have/has at least one current shunt regulator, in particular a higher current shunt regulator, or at least one diode in each case, preferably at least one zener diode in each case, which is designed to have a fixed value for the first and/or second supply voltage.

14. An automation technology system (1) for detecting and/or setting a process variable, having:
- A first two-wire cable (12) for transmitting a loop current (I) with a modulated two-wire signal;
- An automation technology field device (1) with a field device housing (2) which has at least one housing opening (3), wherein the field device (1) further comprises field device electronics (4) which are arranged inside the field device housing (2) and are adapted to communicate data, in particular the process variable, in the form of two-wire signals, in particular two-wire signals which are based on a HART protocol;
- A field device adapter (6) as claimed in one or more of the preceding claims.

## Revendications

1. Adaptateur d'appareil de terrain (6) destiné à la transmission de données sans fil, lequel adaptateur comprend au moins :
- un boîtier d'adaptateur (7) avec une première extrémité (8) et une deuxième extrémité (9), la première extrémité (8) présentant un premier élément de raccordement (16a) et un deuxième élément de raccordement (16b) pour le raccordement électrique à une électronique d'appareil de terrain (4) d'un appareil de terrain (1) et la deuxième extrémité (9) présentant un troisième élément de raccordement (11a) et un quatrième élément de raccordement (11b) pour le raccordement électrique d'un câble 2 fils (12) ;
- une électronique d'adaptateur (14) disposée dans le boîtier d'adaptateur (7), laquelle électronique relie le premier élément de raccordement (16a) au troisième élément de raccordement (11a) par une première ligne de raccordement électrique (25) et le deuxième élément de raccordement (16b) au quatrième élément de raccordement (11b) par une deuxième ligne de raccordement électrique (26), l'électronique d'adaptateur (14) comprenant un premier circuit d'alimentation (15a) introduit dans la première ligne de raccordement (25), lequel premier circuit est de préférence non régulé, lequel premier circuit est destiné à fournir une première tension d'alimentation à partir d'un courant de boucle (I) circulant dans la première ligne de raccordement (25) et un deuxième circuit d'alimentation (15b) inséré dans la deuxième ligne de raccordement (26), lequel deuxième circuit est de préférence non régulé, lequel deuxième circuit est destiné à fournir une deuxième tension d'alimentation à partir du courant de boucle (I) circulant dans la deuxième ligne de raccordement (25), l'électronique d'adaptateur (14) comprenant en outre un modem HART (17), lequel modem est basé sur un protocole HART, lequel modem est relié à la deuxième ligne de raccordement au moins par l'intermédiaire d'un point de prélèvement (23) disposé dans la deuxième ligne de raccordement, et lequel modem est conçu pour prélever un signal 2 fils modulé sur le courant de boucle (I) et pour le convertir en un signal, de préférence un signal UART et/ou pour convertir un signal alimenté, de préférence un signal UART, en un signal 2 fils et moduler le signal 2 fils converti sur le courant de boucle (I) par l'intermédiaire du point de prélèvement (23), l'électronique d'adaptateur comprenant en outre un module radio (19) avec une antenne pour l'émission et/ou la réception, laquelle électronique est conçue pour émettre le signal, de préférence le signal UART, converti et alimenté par le modem HART (17) comme un signal radio et/ou un signal radio devant être converti par le modem HART (17) en un signal 2 fils, et de l'acheminer au modem HART sous forme de signal, de préférence de signal UART, l'électronique d'adaptateur étant conçue de telle sorte que le premier circuit d'alimentation (15a) alimente le modem HART (17) avec la première tension d'alimentation et le deuxième circuit d'alimentation (15b) alimente le module radio (19) avec la deuxième tension d'alimentation, de préférence indépendamment l'un de l'autre.

2. Adaptateur d'appareil de terrain selon la revendication précédente, pour lequel l'électronique d'adaptateur (14) présente en outre une séparation galvanique (30), laquelle sépare galvaniquement le modem HART (17) du module radio (19) et le modem HART (17) et le module radio (19) communiquent au moins le signal, de préférence le signal UART, via la séparation galvanique (30).

3. Adaptateur d'appareil de terrain selon l'une ou plusieurs des revendications précédentes, pour lequel le modem HART (17) est configuré comme maître primaire ou secondaire selon le protocole HART.

4. Adaptateur d'appareil de terrain selon l'une ou plusieurs des revendications précédentes, pour lequel l'électronique d'adaptateur (14) comprend en outre au moins une résistance de communication (18) insérée dans la première ligne de raccordement (25) entre le premier circuit d'alimentation (15a) et le troisième élément de raccordement (11a).

5. Adaptateur d'appareil de terrain selon l'une ou plusieurs des revendications précédentes, pour lequel l'électronique d'adaptateur (14) présente en outre au moins une résistance de communication (18) insérée entre le deuxième circuit d'alimentation (15b) et le quatrième élément de raccordement (11b) dans la deuxième ligne de raccordement (26).

6. Adaptateur d'appareil de terrain selon l'une ou plusieurs des revendications précédentes, pour lequel le module radio est en outre conçu pour émettre et/ou recevoir le signal radio selon l'un des protocoles radio suivants :
- un protocole Bluetooth ou une variante modifiée de celui-ci,
- un protocole 6LoWPAN,
- un protocole WirelessHART, et/ou
- un protocole 6TiSCH.

7. Adaptateur d'appareil de terrain selon l'une ou plusieurs des revendications précédentes, pour lequel l'électronique d'adaptateur (14) comporte en outre des mesures CEM (29), lesquelles sont conçues de telle sorte qu'au moins le premier et/ou le deuxième circuit d'alimentation (15a, 15b) sont protégés contre les perturbations CEM.

8. Adaptateur d'appareil de terrain selon l'une ou plusieurs des revendications précédentes, pour lequel l'électronique d'adaptateur (14) présente en outre des mesures de protection Ex (28, 32), les mesures de protection Ex comprenant des mesures de protection Ex (32) limitant le courant et/ou des mesures (28) limitant la tension.

9. Adaptateur d'appareil de terrain selon la revendication précédente, pour lequel les mesures de limitation de tension (28) comprennent au moins un régulateur shunt de courant, notamment un régulateur shunt de courant élevé, lequel est monté en parallèle avec le premier et/ou le deuxième circuit d'alimentation (15a, 15b).

10. Adaptateur d'appareil de terrain l'une revendications 8 ou 9, pour lequel les mesures de limitation de courant comprennent au moins une résistance (32), laquelle est raccordée entre le premier circuit d'alimentation (15a) et le modem HART (17) et/ou entre le deuxième circuit d'alimentation et le module radio (19).

11. Adaptateur d'appareil de terrain selon l'une ou plusieurs des revendications précédentes, pour lequel la première extrémité (8) du boîtier d'adaptateur (7) est en outre configurée de telle sorte que la première extrémité est une extrémité fermée, de sorte que l'adaptateur d'appareil de terrain (6) et l'appareil de terrain (1) forment deux unités mécaniques séparées l'une de l'autre.

12. Adaptateur d'appareil de terrain selon l'une des revendications 1 à 10, pour lequel la première extrémité (8) du boîtier d'adaptateur (7) est en outre conçue de telle sorte que l'adaptateur d'appareil de terrain (6) peut être raccordé mécaniquement à un appareil de terrain (1), de préférence à un presse-étoupe (5) d'un appareil de terrain, de préférence encore à un presse-étoupe M20 de l'appareil de terrain (1), de sorte que l'adaptateur d'appareil de terrain (6) et l'appareil de terrain (1) forment une unité reliée mécaniquement.

13. Adaptateur d'appareil de terrain selon l'une ou plusieurs des revendications précédentes, pour lequel le premier et/ou le deuxième circuit d'alimentation (15) comprend respectivement au moins un régulateur shunt de courant, notamment un régulateur shunt de courant élevé ou respectivement au moins une diode, de préférence respectivement au moins une diode Zener, lequel circuit est dimensionné à une valeur fixe pour la première ou la deuxième tension d'alimentation.

14. Système de la technique d'automatisation (1) destiné à la mesure et/ou au réglage d'une grandeur process, lequel système comprend :
- un premier câble 2 fils (12) destiné à la transmission d'un courant de boucle (I) avec un signal 2 fils modulé ;
- un appareil de terrain de la technique d'automatisation (1) avec un boîtier d'appareil de terrain (2), lequel appareil présente au moins une ouverture de boîtier (3), l'appareil de terrain (1) comprenant en outre une électronique d'appareil de terrain (4) disposée à l'intérieur du boîtier d'appareil de terrain (2), laquelle électronique est conçue pour communiquer des données, notamment la grandeur process, sous forme de signaux 2 fils, notamment de signaux 2 fils qui sont basés sur un protocole HART ;
- un adaptateur d'appareil de terrain (6) selon l'une ou plusieurs des revendications précédentes.
